# FASCICULE DE BREVET EUROPEEN

(11) **EP 1 433 006 B1**
(45) Date de publication et mention de la délivrance du brevet: **08.02.2006**
(21) Numéro de dépôt: 02800168.3
(22) Date de dépôt: 01.10.2002
(51) Int. Cl.: G02B 6/34

(54) **COMPOSANT OPTIQUE A FONCTION DE SEPARATION SPECTRALE**
OPTISCHE KOMPONENTE FÜR DIE SPEKTRALE SEPARATION VON LICHT VERSCHIEDENER WELLENLÄNGEN
OPTICAL COMPONENT WITH SPECTRAL SEPARATION

(30) Priorité: 01.10.2001 FR 0112620
(43) Date de publication de la demande: 30.06.2004
(73) Titulaire: YENISTA OPTICS SA, 22300 Lannion (FR)
(72) Inventeur: FOUCHE, Jean-Baptiste, F-91370 Verrieres le Buisson (FR)
(74) Mandataire: Maillet, Alain
(86) Numéro de dépôt international: PCT/FR2002/003339
(87) Numéro de publication internationale: WO 2003/029862

(56) Documents cités:
- EP-A- 0 947 335
- WO-A-98/47032
- US-A- 4 244 045
- US-A- 4 634 215
- US-A- 5 002 350
- US-A- 5 841 583
- US-A- 5 940 554
- US-A- 6 014 483
- PATENT ABSTRACTS OF JAPAN vol. 012, no. 032 (P-661), 30 janvier 1988 (1988-01-30) & JP 62 183405 A (AGENCY OF IND SCIENCE & TECHNOL), 11 août 1987 (1987-08-11)

## Description

L'invention conceme le domaine des composant optiques et plus particulièrement des multiplexeurs et démultiplexeurs optiques de longueur d'onde.

L'homme de l'art sait qu'il est possible d'augmenter considérablement le trafic des réseaux de fibres optiques par des techniques de multiplexage et de démultiplexage en longueur d'onde. Chaque série de données à transporter est émise sur une fréquence optique spécifique, multipliant la capacité de la fibre par le nombre de longueurs d'ondes utilisées.

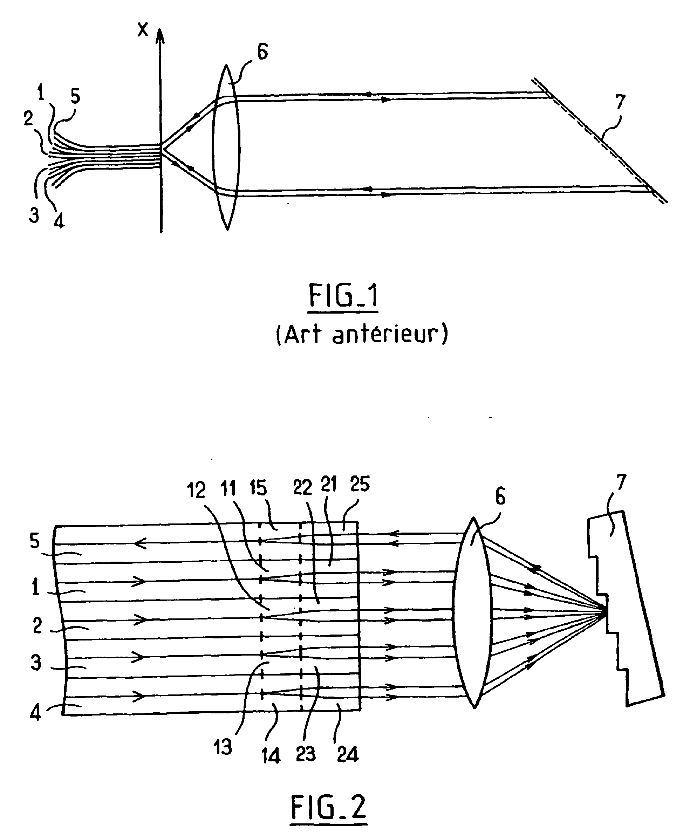

La figure 1 représente un multiplexeur de l'art antérieur. Dans un tel multiplexeur, des fibres optiques élémentaires 1 à 4 dédiées chacune à une bande de fréquence ont leur extrémité dans un plan x constituant le plan d'entrée du multiplexeur. Ce multiplexeur comprend en outre un élément de collimation 6 et un élément diffractif 7. Le plan x d'entrée du multiplexeur est confondu avec le plan focal de l'élément de collimation 6 de manière à ce que les faisceaux d'entrée issus des extrémités des fibres élémentaires 1 à 4 traversent l'élément de collimation 6 et se retrouvent sensiblement parallèles les uns avec les autres. L'élément de diffraction 7 est disposé de sorte que les faisceaux sont renvoyés vers l'élément de collimation 6 qui les superpose pour les introduire à l'extrémité d'une fibre de sortie 5 unique.

Le débit des réseaux optiques étant de plus en plus élevé et la stabilité des sources optiques, en particulier des lasers, n'étant pas parfaite, il est nécessaire de réduire les fluctuations de transmission résultant de cette instabilité, en recherchant une bande passante de multiplexage aussi large que possible.

On souhaite donc augmenter le rapport ^{*FWHM*}/_{Δλ}, où FWHM (Full Width at Half Maximum) désigne la largeur d'une bande élémentaire et Δλ désigne la distance entre deux longueurs d'ondes centrales de deux bandes élémentaires consécutives. On sait que le rapport ^{*FWHM*}/_{Δλ}, est proportionnel au rapport ^{ω}/_{Δ*x*}, où ω désigne le rayon de mode des fibres et Δx désigne l'espacement entre les fibres.

Une méthode connue pour augmenter le rapport ^{*FWHM*}/_{Δλ} consiste donc à utiliser un concentrateur à base de guides d'onde planaires pour réduire Δx. Ce composant d'optique intégré permet en effet de réduire l'espace physique entre les voies. Un tel concentrateur est particulièrement bien adapté pour être utilisé dans les multiplexeurs/démultiplexeurs à réseau de guides planaire AWG (Array Wave Guide Grating). Cependant, il est relativement coûteux.

Une autre méthode consiste à augmenter ω. Ainsi, le document EP 0 859 249 décrit un multiplexeur à fibres optiques comprenant des fibres élémentaires d'entrée transportant chacune une bande de fréquence, une barrette de micro-lentilles, chaque micro-lentille étant associée à une extrémité de fibre. Ces micro-lentilles permettent de faire converger les faisceaux issus des fibres élémentaires pour produire des faisceaux parallèles présentant un rayon de mode plus important que celui des faisceaux d'entrée. Les faisceaux traversent une lentille de collimation qui les dirige vers un réseau de dispersion permettant de générer un faisceau de sortie unique constitué des différents faisceaux superposés.

On comprendra qu'une telle technique requiert un positionnement précis des extrémités des fibres par rapport aux points focaux des micro-lentilles ainsi qu'un alignement précis des axes des fibres élémentaires par rapport aux axes focaux des micro-lentilles. Le document US 4 634 215 décrit un composant optique pour multiplexer/demultiplexer un signal optique comprenant an réseau de diffraction et des moyens conçus pour adapter des ouvertures de guides multimodes.

Un but de la présente invention est de fournir un multiplexeur/démultiplexeur à fibre optique plus économique, facile à monter et présentant un rapport ^{*FWHM*}/_{Δλ} accru.

A cet effet, l'invention propose un composant à fonction optique comprenant au moins un élément de guidage d'entrée, au moins un élément de guidage de sortie et un élément de séparation spectrale intercalé entre le ou les élément(s) de guidage d'entrée et le ou les élément(s) de guidage de sortie, caractérisé en ce que l'un au moins des éléments de guidage d'entrée ou de sortie comporte une fibre comprenant une portion conçue pour élargir le rayon de mode d'un faisceau qu'il guide.

Dans le cadre de la présente invention, la portion conçue pour élargir le rayon de mode du faisceau peut être formée d'une portion à gradient d'indice, d'une portion dont la taille de coeur ou de gaine varie transversalement et/ou longitudinalement, ou encore d'une portion dont l'indice de coeur ou de gaine varie transversalement et/ou longitudinalement.

Un tel composant optique permet avantageusement d'obtenir un faisceau dont le rayon de mode est élargi par rapport au rayon de mode du faisceau transporté par l'élément de guidage associé.

Dans ce composant, la fonction d'élargissement du rayon de mode de chaque faisceau est avantageusement intégrée à la fibre d'entrée et/ou de sortie de ce faisceau.

D'autres caractéristiques et avantages ressortiront encore de la description qui suit, laquelle est purement illustrative et non limitative et doit être lue en regard des figures annexées parmi lesquelles :
- la figure 1 représente schématiquement un multiplexeur/démultiplexeur à élément diffractif de l'art antérieur,
- la figure 2 représente schématiquement un multiplexeur/démultiplexeur conforme à un mode de réalisation de l'invention,
- la figure 3 représente un exemple de fibre comportant une portion à gradient d'indice,

Bien entendu la présente invention n'est pas limitée au nombre de fibres particulier illustré sur les figures annexées, notamment à un multiplexeur 4 vers 1, mais s'étend à tout composant comprenant n fibres.

Le composant représenté sur la figure 2, fonctionne comme un multiplexeur (un tel composant pourrait bien-entendu être également utilisé en démultiplexeur). Ce composant comprend des fibres optiques 1 à 5 coplanaires, parallèles entre elles et juxtaposées. Les fibres 1 à 4 sont des fibres d'entrée dédiées chacune à une bande de fréquence donnée. La fibre 5 est une fibre de sortie assurant la transmission du faisceau optique multiplexé obtenu par superposition des faisceaux issus des fibres d'entrée 1 à 4. Le composant comprend en outre un élément de focalisation 6 de type lentille placé en regard des extrémités des fibres 1 à 5 et un élément diffractif 7, par exemple un réseau de diffraction, qui reçoit les signaux issus des fibres d'entrée 1 à 4 via l'élément de focalisation 6.

De manière connue, l'élément de diffraction 7 a la propriété de renvoyer, séparées angulairement les différentes longueurs d'onde contenues dans un même faisceau incident. En vertu du principe du retour inverse de la lumière, le réseau peut recombiner, dans la direction de la fibre de sortie 5 via l'élément de focalisation 6, les faisceau incidents séparés angulairement et issus les fibres d'entrée 1 à 4.

Les fibres d'entrée 1 à 4 et la fibre de sortie 5 présentent respectivement à leur extrémité une portion de silice 11 à 14 et 15 ainsi qu'une portion de fibre optique à gradient d'indice 21 à 24 et 25. Les portions de fibre à gradient d'indice présentent un coeur dont l'indice de réfraction varie en fonction de la distance radiale. L'indice de réfraction, plus élevé au centre du coeur, diminue à mesure que l'on approche de la gaine optique, forçant ainsi les rayons lumineux à suivre une trajectoire courbe qui se refocalise périodiquement sur l'axe central du coeur. Dans une fibre optique à gradient d'indice, l'indice de réfraction de la fibre se modifie selon une loi déterminée de variation continue d'indice, par exemple parabolique. Ainsi, le rayon incliné s'éloignant de l'axe rencontre un milieu d'indice décroissant progressivement, ce qui a pour effet de le coucher et de le ramener vers l'axe.

Sur cette figure, les faisceaux issus des portions à gradient d'indice se propagent dans le vide jusqu'à l'élément de focalisation 6 qui les focalise sur l'élément 7. Chaque faisceau correspond à une bande de fréquence donnée et le réseau est adapté pour superposer l'ensemble des faisceaux incidents en un seul faisceau dirigé vers l'élément de focalisation 6 et la fibre de sortie 5.

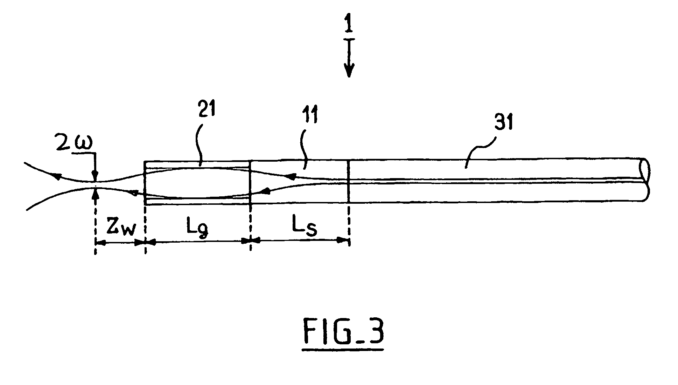

Sur la figure 3, on a représenté plus précisément un exemple de fibre 1 comprenant une portion à gradient d'indice. Une telle fibre est formée d'une fibre monomode 31 classique à l'extrémité de laquelle a été soudé un tronçon de silice 11 de longueur Lₛ suivi d'un tronçon de fibre à gradient d'indice 21 de longueur L_{g} constituant la portion à gradient d'indice. Les faisceaux issus du coeur de la fibre monomode 31 traversent successivement le tronçon 11 de silice pure et le tronçon 21 à gradient d'indice. Dans le tronçon 11 de silice pure, les faisceaux ont tendance à diverger tandis que dans le tronçon 21 de silice à gradient d'indice, ils ont tendance à se reconcentrer. La distance de travail z_{ω} et le rayon de mode w du faisceau en sortie de fibre dépendent des longueurs Lₛ et L_{g} des tronçons 11 et 21 soudés à la fibre monomode 31.

II est également possible d'utiliser des fibres similaires ne comprenant pas le tronçon 11 de silice pure. Dans ce cas, la fibre monomode 31 est directement soudée au tronçon 21 de fibre à gradient d'indice.

En outre, les portions de fibres conçues pour élargir le rayon de mode des faisceaux ne sont pas nécessairement constituées par des tronçons rapportés et fixés, par exemple soudés. On peut également réaliser directement dans la fibre monomode une portion de fibre générant un élargissement de mode par modification locale de la structure et/ou des propriétés de la fibre, par un traitement adéquat. On peut par exemple à cet effet utiliser des techniques d'élargissement de coeur (TEC) par diffusion thermique pour réaliser un élargissement du coeur de la fibre monomode sur une portion de longueur déterminée.

Dans une mise en oeuvre du multiplexeur de la figure 2, les fibres 1 à 4 d'entrée et la fibre 5 de sortie sont constituées de fibres monomode 31 à 35 présentant une constitution similaire à celle de la figure 3.

Les fibres élémentaires 1 à 5 de la figure 2 peuvent être positionnées dans un porte-fibre comprenant des rainures en V de positionnement des fibres. Les extrémités des fibres 1 à 5 sont ensuite polies pour être alignées les unes avec les autres. L'opération de polissage modifie légèrement la longueur des portions 21 à 25 de fibre à gradient d'indice. On peut montrer que cette modification de longueur présente peu de conséquences sur le rayon de mode ω du faisceau en sortie de fibre.

Néanmoins, pour contrôler précisément le comportement du faisceau, il est possible d'ajouter au bout de chaque fibre 1 à 5 un tronçon de silice supplémentaire sans effet sur la trajectoire des faisceaux. Les fibres sont ensuite positionnées dans le porte-fibre avec ce tronçon supplémentaire avant d'être polies ensemble. De cette manière, la longueur des portions 21 à 25 à gradient d'indice ne se trouve pas altérée par l'opération de polissage.

On peut également obtenir de meilleures performances en diminuant le diamètre des fibres au niveau de leur extrémité. A cet effet, on peut avantageusement réaliser une attaque chimique de leurs surfaces externes pour enlever une couche de la gaine optique. On diminue ainsi la valeur de l'espacement Δx entre les rayons de mode.

Les fibres utilisées dans les trois modes de réalisation précédemment décrits permettent d'augmenter les rayons de mode ω des faisceaux élémentaires de manière intégrée. Le dispositif conforme à la présente invention présente l'avantage que les faisceaux lumineux ne traversent pas l'air entre les extrémités de fibres monomodes et les portions assurant la fonction d'élargissement de rayon de mode.

Par ailleurs l'invention permet d'éliminer les problèmes d'alignement inhérents à la technique antérieure.

On a décrit précédemment des composants conformes à la présente invention dans lesquels, la portion conçue pour élargir le rayon de mode du faisceau est formée d'une portion à gradient d'indice. Cependant l'invention n'est pas limitée à ce mode de réalisation particulier. Comme on l'a évoqué précédemment la présente invention s'étend également au cas où la portion assurant l'élargissement de mode est formée d'une portion de fibre dont la taille de coeur ou de gaine varie longitudinalement et/ou transversalement, ou encore d'une portion dont l'indice de coeur ou de gaine varie longitudinalement et/ou transversalement.

En outre, l'élément diffractif peut être constitué par un réseau « échelle », un réseau holographique de phase ou en volume, ou encore l'association de plusieurs de ces éléments.

## Revendications

1. Composant à fonction optique comprenant au moins une fibre d'entrée monomode (1-4), au moins une fibre de sortie monomode (5) et un réseau de diffraction (7) intercalé entre la ou les fibre(s) d'entrée (1-4) et la ou les fibre(s) de sortie (5), l'une au moins des fibres (1-5) d'entrée ou de sortie comprenant une portion (21-25) conçue pour élargir le rayon de mode du faisceau qui se propage dans cette fibre.

2. Composant selon la revendication 1, **caractérisé en ce que** la portion (21-25) conçue pour élargir le rayon de mode du faisceau est formée d'une portion à gradient d'indice.

3. Composant selon la revendication 1, **caractérisé en ce que** la portion (21-25) conçue pour élargir le rayon de mode du faisceau est formée d'une portion de fibre dont la taille de coeur ou de gaine varie transversalement et/ou longitudinalement

4. Composant selon la revendication 1, **caractérisé en ce que** la portion (21-25) conçue pour élargir le rayon de mode du faisceau est formée d'une portion de fibre dont l'indice de coeur ou de gaine varie transversalement et/ou longitudinalement

5. Composant selon l'une des revendications 1 à 4, **caractérisé en ce que** la portion (21-25) conçue pour élargir le rayon de mode du faisceau est formée d'un tronçon de fibre rapporté et fixé à l'extrémité de la fibre (1-5).

6. Composant selon l'une des revendications 1 à 4, **caractérisé en ce que** la portion (21-25) conçue pour élargir le rayon de mode du faisceau est formée par modification locale de la structure et/ou des propriétés de la fibre, par un traitement adéquat.

7. Composant selon l'une des revendications 1 à 6, **caractérisé en ce qu'**il forme un multiplexeur/démultiplexeur de longueurs d'ondes

8. Composant selon la revendication 7, **caractérisé en ce que** le réseau de diffraction (7) reçoit les faisceaux lumineux d'une pluralité de fibres d'entrée (1-4) et renvoie les faisceaux superposés vers au moins une fibre de sortie (5)

9. Composant selon la revendication 7, **caractérisé en ce que** le réseau de diffraction (7) reçoit les faisceaux lumineux superposés d'au moins une fibre d'entrée (5) et renvoie les faisceaux séparément vers des fibres de sortie (1-4).

10. Composant selon l'une des revendications précédentes, **caractérisé en ce que** la ou les fibre(s) (1-5) comprennent en outre une portion de silice pure positionnée entre l'extrémité de la fibre (31) et la portion de fibre assurant l'élargissement du rayon de mode (21-25)

11. Composant optique selon l'une des revendications précédentes, **caractérisé en ce que** chaque fibre élémentaire (1-5) présente à son extrémité une portion de silice de protection raccordée à la portion de fibre assurant l'élargissement du rayon de mode (21-25), lesdites portions de silice de protection pouvant être polies sans risquer de modifier la longueur de la portion de fibre assurant l'élargissement du rayon de mode (21-25).

12. Composant optique selon l'une des revendications précédentes, **caractérisé en ce que** le diamètre de l'extrémité de la ou des fibre(s) (1-5) comportant au moins une portion de fibre assurant l'élargissement du rayon de mode (21-25) est réduit par attaque chimique des surfaces externes des fibres.

13. Composant optique selon l'une des revendications précédentes, **caractérisé en ce que** le réseau de diffraction (7) est choisi dans le groupe comprenant, les réseaux échelle, les réseaux holographiques de phase ou en volume, ou encore l'association de plusieurs de ces éléments.

## Patentansprüche

1. Komponente mit optischer Funktion, welche mindestens eine Einmoden-Eingangsfaser (1-4), mindestens eine Einmoden-Ausgangsfaser (5) und ein zwischen der oder den Eingangsfaser (n) (1-4) und der oder den Ausgangsfaser(n) (5) geschaltetes Beugungsgitter (7) umfasst, wobei mindestens eine der Eingangs- oder Ausgangsfasern (1-5) einen Abschnitt (21-25) umfasst, der so gestaltet ist, dass er den Modenradius des Strahlenbündels vergrößert, das sich in dieser Faser ausbreitet.

2. Komponente nach Anspruch 1, **dadurch gekennzeichnet, dass** der Abschnitt (21-25), der so gestaltet ist, dass er den Modenradius des Strahlenbündels vergrößert, durch einen Abschnitt mit Gradientenindex gebildet wird.

3. Komponente nach Anspruch 1, **dadurch gekennzeichnet, dass** der Abschnitt (21-25), der so gestaltet ist, dass er den Modenradius des Strahlenbündels vergrößert, durch einen Faserabschnitt gebildet wird, dessen Größe des Kerns oder des Mantels in Querrichtung und/oder in Längsrichtung variiert.

4. Komponente nach Anspruch 1, **dadurch gekennzeichnet, dass** der Abschnitt (21-25), der so gestaltet ist, dass er den Modenradius des Strahlenbündels vergrößert, durch einen Faserabschnitt gebildet wird, dessen Kern- oder Mantelindex in Querrichtung und/oder in Längsrichtung variiert.

5. Komponente nach einem der Ansprüche 1 bis 4, **dadurch gekennzeichnet, dass** der Abschnitt (21-25), der so gestaltet ist, dass er den Modenradius des Strahlenbündels vergrößert, von einem Faserteilabschnitt gebildet wird, der an das Ende der Faser (1-5) angesetzt und an ihm befestigt ist.

6. Komponente nach einem der Ansprüche 1 bis 4, **dadurch gekennzeichnet, dass** der Abschnitt (21-25), der so gestaltet ist, dass er den Modenradius des Strahlenbündels vergrößert, durch lokale Änderung der Struktur und/oder der Eigenschaften der Faser durch eine geeignete Behandlung gebildet wird.

7. Komponente nach einem der Ansprüche 1 bis 6, **dadurch gekennzeichnet, dass** sie einen Wellenlängen-Multiplexer/Demultiplexer bildet.

8. Komponente nach Anspruch 7, **dadurch gekennzeichnet, dass** das Beugungsgitter (7) die Lichtbündel von mehreren Eingangsfasern (1-4) empfängt und die überlagerten Bündel zu mindestens einer Ausgangsfaser (5) zurücksendet.

9. Komponente nach Anspruch 7, **dadurch gekennzeichnet, dass** das Beugungsgitter (7) die überlagerten Lichtbündel von wenigstens einer Eingangsfaser (5) empfängt und die Bündel getrennt zu Ausgangsfasern (1-4) zurücksendet.

10. Komponente nach einem der vorhergehenden Ansprüche, **dadurch gekennzeichnet, dass** die Faser(n) (1-5) außerdem einen Abschnitt aus reinem Siliziumdioxid umfassen, der zwischen dem Ende der Faser (31) und dem die Vergrößerung des Modenradius sicherstellenden Faserabschnitt (21-25) angeordnet ist.

11. Optische Komponente nach einem der vorhergehenden Ansprüche, **dadurch gekennzeichnet, dass** jede Elementarfaser (1-5) an ihrem Ende einen Siliziumdioxid-Schutzabschnitt aufweist, der an den die Vergrößerung des Modenradius sicherstellenden Faserabschnitt (21-25) angeschlossen ist, wobei die Siliziumdioxid-Schutzabschnitte poliert werden können, ohne dass die Gefahr besteht, dass die Länge des die Vergrößerung des Modenradius sicherstellenden Faserabschnittes (21-25) geändert wird.

12. Optische Komponente nach einem der vorhergehenden Ansprüche, **dadurch gekennzeichnet, dass** der Durchmesser des Endes der Faser(n) (1-5), welche mindestens einen die Vergrößerung des Modenradius sicherstellenden Faserabschnitt (21-25) aufweist (aufweisen), durch chemische Bearbeitung der Außenflächen der Fasern verringert wird.

13. Optische Komponente nach einem der vorhergehenden Ansprüche, **dadurch gekennzeichnet, dass** das Beugungsgitter (7) aus der Gruppe gewählt ist, welche die Stufengitter, die holographischen Phasen- oder Volumengitter sowie die Verknüpfung mehrerer dieser Elemente umfasst.

## Claims

1. Optical component comprising at least one input monomode fiber (1-4), at least one output monomode fiber (5) and a diffraction grating (7) positioned between the input fiber or fibers (1-4) and the output fiber or fibers (5), at least one of the input or output fibers (1-5) comprising a portion (21-25) designed to increase the radius of the mode field of the beam which is propagated in this fiber.

2. Component as claimed in claim 1, wherein the portion (21-25) designed to increase the mode field radius of the beam is formed of a graded-index portion.

3. Component as claimed in claim 1, wherein the portion (21-25) designed to increase the mode field radius of the beam is formed of a portion of fiber whose core or cladding size varies transversally and/or longitudinally.

4. Component as claimed in claim 1, wherein the portion (21-25) designed to increase the mode field radius of the beam is formed of a portion of fiber whose core or cladding refractive index varies transversally and/or longitudinally.

5. Component as claimed in one of claims 1 to 4, wherein the portion (21-25) designed to increase the mode field radius of the beam is formed of a segment of fiber added and attached to the end of the fiber (1-5).

6. Component as claimed in one of claims 1 to 4, wherein the portion (21-25) designed to increase the mode field radius of the beam is formed by local modification of the structure and/or of the properties of the fiber, through an appropriate treatment.

7. Component as claimed in any one of claims 1 to 6, wherein it forms a wavelength multiplexer/demultiplexer.

8. Component as claimed in claim 7, wherein the diffraction grating (7) receives the light beams from a plurality of input fibers (1-4) and sends the superimposed beams to at least one output fiber (5).

9. Component as claimed in claim 7, wherein the diffraction grating (7) receives the superimposed light beams from at least one input fiber (5) and sends the beams separately to output fibers (1-4).

10. Component as claimed in one of the preceding claims, wherein the fiber or fibers (1-5) also comprise a pure silica portion positioned between the end of the fiber (31) and the fiber portion ensuring the increase in the mode field radius (21-25).

11. Component as claimed in one of the preceding claims, wherein each basic fiber (1-5) comprises, at its end, a protective silica portion connected to the fiber portion ensuring the increase of the mode field radius (21-25), said protective silica portions can be polished without the risk of modifying the length of the fiber portion ensuring the increase of the mode field radius (21-25).

12. Component as claimed in one of the preceding claims, wherein the diameter of the end of the fiber or fibers (1-5) comprising at least one fiber portion ensuring the increase of the mode field radius (21-25) is reduced by chemical attack of the external surfaces of the fibers.

13. Component as claimed in one of the preceding claims, wherein the diffraction grating (7) is chosen from the group comprising echelle gratings, volume-phase holographic gratings, or even the combination of several of these elements.
